# EUROPEAN PATENT APPLICATION

(11) **EP 3 381 300 A1**
(43) Date of publication of application: **03.10.2018**
(21) Application number: 16868072.6
(22) Date of filing: 08.11.2016
(51) Int. Cl.: A23L 3/015

(54) **SYSTEM AND METHOD FOR HIGH-PRESSURE TREATMENT OF ALIMENTARY LIQUID**

(30) Priority: 26.11.2015 ES 201531722
(71) Applicant: Metronics Technologies S.L, 31110 Noain (Navarra) (ES)
(72) Inventor: DE ORTE GLARÍA, Benito Andrés, 31110 Noain (Navarra) (ES)
(74) Representative: Evens, Paul Jonathan
(86) International application number: PCT/ES2016/070791
(87) International publication number: WO 2017/089633

(57) **Abstract**

The invention relates to a system, and to a method using said system, for high-pressure treatment of alimentary liquid, which system comprises: a treatment zone (3); pumping means (2) for pumping the liquid, which comprise a first side (2.1) for the inlet and outlet of the untreated liquid and a second side (2.2) for the inlet and outlet of the treated liquid, each of the sides (2.1, 2.2) having a chamber (2.4) in which the liquid can be contained, and a main movable element (2.3) for alternately pumping the liquid through the first side (2.1) and through the second side (2.2); and a pipe (1) disposed so as to carry the untreated liquid to the chamber (2.4) of the first side (2.1) and from the chamber (2.4) of the first side (2.1) to the treatment zone (3), and to carry the treated liquid from the treatment zone (3) to the chamber (2.4) of the second side (2.2) and to the outlet of the chamber (2.4) of the second side (2.2).

## Description

### Technical field

The present invention is related to the industry dedicated to high-pressure treatment of foods, and more specifically, to the industry dedicated to pasteurization or sterilization of foods in a liquid state.

### State of the art

Systems and methods in accordance with these systems for treating or pasteurizing food at high pressure (high pressure processing, or HPP) are known. These methods are carried out by means of systems that basically include a chamber for containing the food during the pasteurization thereof and one-way pumping means for pumping water into said chamber. With the food contained in the chamber, water is introduced into the chamber until reaching a suitable pressure for carrying out the desired treatment.

This pressure is maintained during a period of time, which depends on the type of food disposed in the chamber. Once said time period is over, a relief valve of the chamber opens to release, at least partially, the water contained in the chamber, such that the pressure is reduced until it is equal to the atmospheric pressure of the environment in which the chamber is located, to make it possible to easily and safely open the same.

To carry out these types of methods for pasteurizing food, the food is disposed in containers adapted for high pressure processing (HPP) before being introduced into the chamber. In the case of liquid foods, these foods are introduced into containers, such as flexible bottles or aseptic bags, and pasteurized by means of the same method and system used for solid foods.

Treating liquid foods in the same way as solid foods does not allow for an optimization of the system and method used with regard to, for example, energy efficiency. It is therefore necessary to develop a system and a method for treating liquid foods that provides an effective alternative to the systems and methods currently used.

### Object of the invention

The present invention relates to a system for high-pressure treatment of alimentary liquid, which comprises a treatment zone in which the liquid is subjected to high pressure; pumping means for pumping the liquid, which in turn comprise a first side for the inlet and outlet of the untreated liquid and a second side for the inlet and outlet of the treated liquid, each of the sides having a chamber in which the liquid can be contained, as well as a main movable element for alternately pumping the liquid through the first side and through the second side; and a pipe disposed so as to carry the untreated liquid to the chamber of the first side and from the chamber of the first side to the treatment zone, and to carry the treated liquid from the treatment zone to the chamber of the second side and to the outlet of the chamber of the second side. This way, the system has the ability to recover at least part of the energy transmitted to the untreated liquid by the pumping means via the liquid, after being treated, that returns to the pumping means. Therefore, the pumping means, in addition to pumping the liquid, recover energy.

The system comprises a first large valve placed in front of the chamber of the first side and a second large valve between the chamber of the first side and the treatment zone, the first large valve and the second large valve being arranged to jointly regulate the passage of untreated liquid to the inlet and outlet of the chamber of the first side.

The system comprises a third large valve between the treatment zone and the chamber of the second side and a fourth large valve placed at the rear of the chamber of the second side, the third large valve and the fourth large valve being arranged to jointly regulate the passage of treated liquid to the inlet and outlet of the chamber of the second side.

The system comprises a number of containers in the treatment zone for containing the liquid at high pressure, each one of the containers comprising a first end for the inlet and outlet of the liquid, a second end for the inlet and outlet of the liquid, and a secondary movable element with free movement. The number of containers is at least two, the containers being connected to each other in parallel.

The conduit, in turn, has a divergence point to carry the untreated liquid by means of two branches to the first end and to the second end of the containers, and a convergence point to join the two branches after the passage of the liquid through the containers.

The system comprises first small valves and second small valves to regulate the inlet of liquid to each one of the containers through the first end and through the second end in an alternating way.

The present invention also relates to a method for high-pressure treatment of alimentary liquid, which uses the system and is also an object of the present invention. The method comprises the steps of the inlet of an untreated liquid into the chamber of the first side; pumping the untreated liquid from the chamber of the first side to the treatment zone; the outlet of the treated liquid from the treatment zone by the action of the untreated liquid pumped from the chamber of first side to the treatment zone; the inlet of the treated liquid into the chamber of the second side; and the outlet of the treated liquid from the chamber of the second side.

The method allows the passage of the liquid through the second large valve and prevents the passage of the liquid through the first large valve during the outlet of the liquid from the chamber of the first side.

Additionally, with the fourth large valve preventing the passage of liquid, the third large valve closes while the main movable element is pumping liquid through the first side.

Furthermore, with the main movable element on the second side and the fourth large valve preventing the passage of liquid, the third large valve opens to allow for the inlet of the liquid into the chamber of the second side.

The method comprises the passage of liquid regulated such that it alternately enters through the first end and the second end of each one of the containers.

The method comprises an initial pressurization step of the system. The initial pressurization is preferably carried out with another liquid, different from the alimentary liquid to be treated. Additionally or alternatively, in the initial pressurization the liquid simultaneously enters through the first end and the second end of each one of the containers.

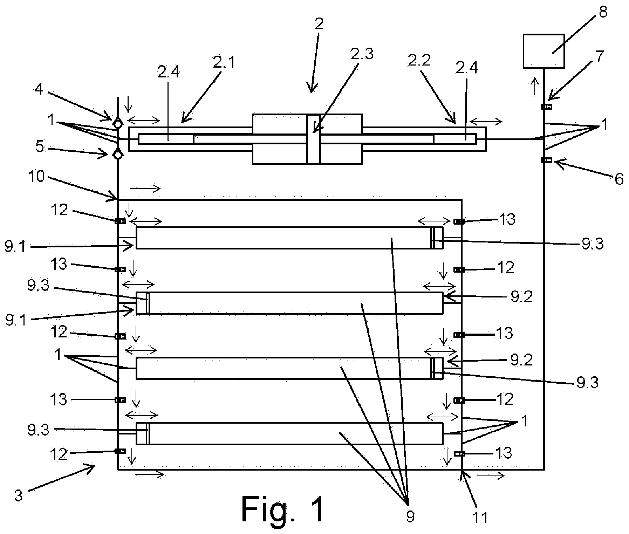

### Description of the figure

The figure shows a system for high-pressure treatment of liquids, object of the present invention, which is used in a method for high-pressure treatment of liquids, which is also an object of the present invention.

### Detailed description of the invention

The present invention relates to a system and a method for high-pressure treatment of liquids. The liquids are alimentary liquids and by means of the present invention the sterilization or pasteurization thereof is carried out without needing to package or bottle them. The system comprises a conduit (1) for carrying the liquid, pumping means (2) and a treatment zone (3), in which the liquid is subjected to high pressure.

In the present description, the order of the location or positioning of the elements and the parts of the elements in the system is established according to the path followed by the liquid, which is reflected in the figure by arrows. For example, the terms "front" and "rear" are used taking said path into consideration.

The pumping means (2) comprise a first side (2.1), a second side (2.2) and a main movable element (2.3). Both the first side (2.1) and the second side (2.2) are configured to connect to the conduit (1) and further comprise a chamber (2.4) in which the liquid can be contained. The main movable element (2.3) is configured to be actuated. By means of the movement of the main movable element (2.3), the liquid alternatively enters and exits through the two aforementioned sides (2.1, 2.2). During the functioning of the system, the main movable element (2.3) moves linearly and continuously according to a back-and-forth motion. The main movable element (2.3) is preferably a piston able to be actuated. This way, the pumping means (2) are preferably a pressure intensifier, in which the non-return valves thereof of the second side (2.2) are substituted by a third large valve (6) and a fourth large valve (7), which are described below.

The treatment zone (3) is arranged in the conduit (1), in other words, disposed in series with said conduit (1), and the pumping means (2) are connected in parallel with the treatment zone (3) by means of the conduit (1). The pumping means (2) are arranged to receive the untreated liquid in the chamber (2.4) located on the first side (2.1) and the treated liquid in the chamber (2.4) located on the second side (2.2).

With this configuration, it is possible for the system to recover energy. The liquid is pumped to the treatment zone (3) by the pumping means (2), returning by the action of that pump to said pumping means (2), by which the liquid returns to the pumping means (2) with at least a part of the energy that has been transmitted to the same by the pumping means (2) for the pumping thereof to the treatment zone (3). In other words, the liquid coming out of the treatment zone (3) contributes to the input of the liquid into the treatment zone (3).

The system is configured such that the untreated liquid reaches the treatment zone (3) by being pumped by the pumping means (2). To do so, the system comprises a first large valve (4) arranged in front of the chamber (2.4) of the first side (2.1) and a second large valve (5) arranged between the chamber (2.4) of the first side (2.1) and the treatment zone (3). When the untreated liquid is pumped by the pumping means (2), said liquid is carried through the conduit (1) to the treatment zone (3), passing through the second large valve (5), the passage of untreated liquid through the first large valve (4) being blocked or prevented, with the aim of optimizing the pumping of the liquid to the treatment zone (3).

The second large valve (5) is configured to block the passage of liquid from the treatment zone (3) to the chamber (2.4) of the first side (2.1). Additionally, and preferably, when the passage of liquid through the first large valve (4) is permitted, the passage of liquid through the second large valve (5) is blocked.

This way, the opening and closing of the first large valve (4) and the second large valve (5) can be controlled, or said valves can be non-return valves, which simplifies the operation of the system.

The system further comprises the third large valve (6) arranged between the treatment zone (3) and the chamber (2.4) of the second side (2.2), as well as the fourth large valve (7) arranged at the rear of the chamber (2.4) of the second side (2.2).

According to the system described, the main movable element (2.3) is actuated to move from the first side (2.1) to the second side (2.2) while the untreated liquid is introduced into the chamber (2.4) of the first side (2.1). To do so, the first large valve (4) allows the passage of the liquid through the same. At the same time, the fourth large valve (7) is allowing the passage of the liquid through the same such that the treated liquid is pumped from the chamber (2.4) of the second side (2.2) to a packaging machine (8), which is not an object of the present invention. Additionally, the passage of the treated liquid to the treatment zone (3) is prevented by the third large valve (6).

Subsequently, the main movable element (2.3) moves from the second side (2.2) to the first side (2.1). Through this movement, the untreated liquid contained in the chamber (2.4) of the first side (2.1) is pumped to the treatment zone (3). To do so, the first large valve (4) prevents the passage of the liquid through the same, while the second large valve (5) allows the passage thereof through the same. The untreated liquid is contained in the treatment zone (3) at high pressure, which causes the liquid to be compressed, by means of said pumping of the liquid to the treatment zone (3).

When the main movable element (2.3) is on the second side (2.2), preferably before starting to move toward the first side (2.1), and the fourth large valve (7) is preventing the passage of liquid through the same, the third large valve (6) opens to allow the treated liquid to be carried from the treatment zone (3) to the chamber (2.4) of the second side (2.2). Since the liquid at high pressure is in the treatment zone (3), the same exits with energy of said treatment zone (3) and is introduced into the chamber (2.4) of the second side (2.2), exerting a pushing force on the main movable element (2.3).

This pushing force, which is the result of the decompression of the liquid when the third large valve (6) opens, contributes to the movement of the main movable element (2.3) towards the first side (2.1), implying a reduction in the energy needed for said movement of the main movable element (2.3). Thus, the system is optimized for the energy recovery. Therefore, the pumping means (2), in addition to pumping the liquid, recover energy.

The third large valve (6) closes before the pumping means (2) pump all of the untreated liquid contained in the chamber (2.4) of the first side (2.1) to the treatment zone (3). This way, the liquid located in the treatment zone (3) is exposed to high pressure, specifically the pressure required for the sterilization or pasteurization thereof. The closing of the third large valve (6) is a function of the pressure for treating the liquid. Thus, a controlled decompression of the liquid in the chamber (2.4) of the second side (2.2) is also achieved, and furthermore, the pressure in the treatment zone (3) is maintained, in other words, it does not drop.

In the treatment zone (3), the system further comprises a number of containers (9) for containing the liquid at high pressure. This number of containers (9) is at least one, and more preferably at least two. The number of containers (9) is a function of, at least, the following aspects: the required time the liquid must remain at high pressure for the sterilization or pasteurization thereof, the pumping capacity of the pumping means (2) and the amount of liquid that can be contained in each one of the containers (9). Preferably, said amount is the same for all of the containers (9). This is due to the fact that the liquid is subjected to high pressure when flowing through the container (9) or containers (9), in other words, it is not stagnant during the entire time it is subjected to high pressure. Preferably, the amount of liquid that can be contained in each one of the containers (9) is greater than the amount of liquid that can be contained in each one of the chambers (2.4).

One of the containers (9) comprises a first end (9.1), a second end (9.2), and a secondary movable element (9.3). The secondary movable elements (9.3) have free movement. The secondary movable elements (9.3) are preferably pistons with free movement. Alternatively, the secondary movable elements (9.3) are flexible membranes.

When the treatment zone (3) comprises various containers (9), in other words at least two, said containers (9) are connected to each other in parallel and in a consecutive way. This way, the first ends (9.1) of the containers (9) arranged in a consecutive manner are connected to each other, just as the second ends (9.2) of said containers (9) are connected to each other.

The secondary movable elements (9.3) are moved as a consequence of the liquid pumped by the pumping means (2) to the treatment zone (3). Additionally, each one of the secondary movable elements (9.3) is configured to push the liquid by the movement thereof, preventing the passage of the liquid through the same. This way, since the secondary movable elements (9.3) are moved, they (9.3) move the liquid, making it exit the same end (9.1; 9.2) through which it entered the containers (9).

The conduit (1), in one section arranged to carry the liquid from the pumping means (2) to the treatment zone (3) before the liquid is treated, includes a divergence point (10) which divides the conduit (1) into two branches to carry the liquid both to the first end (9.1) and to the second end (9.2) of the containers (9). Preferably, the conduit (1) further includes a convergence point (11) as an end or joint of the two branches. The conduit (1) also carries the liquid, which has already been treated, from the convergence point (11) to the chamber (2.4) of the second side (2.2) of the pumping means (2). The convergence point (11) has, for example, a simplification of the conduit (1), and the third large valve (6), only one, can regulate the passage of the treated liquid to the chamber (2.4) of the second side (2.2).

The system comprises first small valves (12) and second small valves (13) for regulating, meaning allowing or blocking, the passage of the liquid between the divergence point (10) and the convergence point (11) through each one of the two branches in a joint way. This is possible since the first small valves (12) and the second small valves (13) are arranged in each one of the two branches in an alternating way.

All of the first small valves (12) are configured to open and close at the same time. All of the second small valves (13) are also configured to open and close at the same time. In turn, the first small valves (12) and the second small valves (13) open and close in an alternating way, meaning that when the liquid passes through one set of these valves, it cannot pass through the other set of these valves. Said alternating implies a change in the direction of the movement of the secondary movable elements (9.3). Preferably, said alternating takes place when said secondary movable elements (9.3) reach the end of their path.

The inlet of the liquid into the containers (9) arranged in odd positions through the first ends (9.1) is regulated by one of the first small valves (12) and the inlet into said containers (9) through the second ends (9.2) is regulated by one of the second small valves (13). Likewise, the inlet of the liquid into the containers (9) arranged in even positions through the first ends (9.1) is regulated by one of the second small valves (13) and the inlet into said containers (9) through the second ends (9.2) is regulated by one of the first small valves (12).

Additionally, when the inlet of the liquid into the container (9) arranged in the last position through one of the ends (9.1; 9.2) is regulated by one of the first small valves (12), the outlet of the liquid from said container (9) through the same end (9.1; 9.2) is regulated by one of the second small valves (13), and when the inlet of the liquid into the container (9) arranged in the last position through one of the ends (9.1; 9.2) is regulated by one of the second small valves (13), the outlet of the liquid from said container (9) through the same end (9.1; 9.2) is regulated by one of the first small valves (12).

The secondary movable elements (9.3) prevent the passage of the liquid through the same, however the system comprises a differential pressure relief valve, not shown in the figures for purposes of clarity, to relieve or reduce the pressure inside the containers (9) when the same reaches dangerous values when the secondary movable elements (9.3) reach one of the ends of their path. The differential pressure relief valves reduce the pressure, allowing the passage of part of the liquid located on one side of the secondary movable elements (9.3) to the other side. The system comprises one of the differential pressure relief valves in each one of the secondary movable elements (9.3).

The start-up of the system requires an initial pressurization. This initial pressurization step is preferably carried out with another liquid, different from the liquid to be treated, in order to reduce costs. Therefore, this other liquid is preferably water.

For the initial pressurization, the passage of the liquid through the first small valves (12) is alternated with the passage through the second small valves (13) as during the operation of the system, the treatment zone (3) being at high pressure, which does not require any modification of the operation of the system. Once the desired pressure is reached, and in the case of using another liquid that is different from the liquid to be treated, the system begins to be filled with the liquid to be treated.

Alternatively, both the first small valves (12) and the second small valves (13) are arranged such that they allow the passage of the liquid through the same, simplifying and facilitating the arrangement of the high-pressure treatment zone (3). Once the desired pressure has been reached, through the closure of the first small valves (12) or the second small valves (13), the secondary movable elements (9.3) are moved to one of the ends of the path thereof. Then, in the case of using another liquid that is different from the liquid to be treated, the system begins to be filled with the liquid to be treated.

## Claims

1. A system for high-pressure treatment of alimentary liquid, **characterized in that** it comprises:
- a treatment zone (3) in which the liquid is subjected to high pressure;
- pumping means (2) for pumping the liquid, which comprise:
∘ a first side (2.1) for the inlet and outlet of the untreated liquid and a second side (2.2) for the inlet and outlet of the treated liquid, each one of the sides (2.1, 2.2) with a chamber (2.4) in which the liquid can be contained;
∘ a main movable element (2.3) for alternatively pumping the liquid through the first side (2.1) and through the second side (2.2);
- a conduit (1) arranged to carry the untreated liquid to the chamber (2.4) of the first side (2.1) and from the chamber (2.4) of the first side (2.1) to the treatment zone (3), and to carry the treated liquid from the treatment zone (3) to the chamber (2.4) of the second side (2.2) and to the outlet of the chamber (2.4) of the second side (2.2).

2. The system according to claim 1, **characterized in that** further comprises a first large valve (4) placed in front of the chamber (2.4) of the first side (2.1) and a second large valve (5) between the chamber (2.4) of the first side (2.1) and the treatment zone (3), the first large valve (4) and the second large valve (5) being arranged to jointly regulate the passage of untreated liquid to the inlet and outlet of the chamber (2.4) of the first side (2.1).

3. The system according to claim 1 or 2, **characterized in that** it further comprises a third large valve (6) between the treatment zone (3) and the chamber (2.4) of the second side (2.2) and a fourth large valve (7) placed at the rear of the chamber (2.4) of the second side (2.2), the third large valve (6) and the fourth large valve (7) being arranged to jointly regulate the passage of treated liquid to the inlet and outlet of the chamber (2.4) of the second side (2.2).

4. The system according to any one of the preceding claims, **characterized in that** it further comprises a number of containers (9) in the treatment zone (3) for containing the liquid at high pressure, each one of the containers (9) comprising a first end (9.1) for the inlet and outlet of the liquid, a second end (9.2) for the inlet and outlet of the liquid, and a secondary movable element (9.3) with free movement.

5. The system according to claim 4, **characterized in that** the number of containers (9) is at least two, the containers (9) connected to each other in parallel.

6. The system according to any of the claims 4 or 5, **characterized in that** the conduit (1) has a divergence point (10) to carry the untreated liquid by means of two branches to the first end (9.1) and to the second end (9.2) of the containers (9), and a convergence point (11) to join the two branches.

7. The system according to any of claims 4 to 6, **characterized in that** it further comprises first small valves (12) and second small valves (13) to regulate the inlet of liquid to each one of the containers (9) through the first end (9.1) and through the second end (9.2) in an alternating way.

8. A method for high-pressure treatment of alimentary liquid, which uses the system defined according to one of the preceding claims, **characterized in that** it comprises the steps of:
- the inlet of the untreated liquid to the chamber (2.4) of the first side (2.1);
- pumping the untreated liquid from the chamber (2.4) of the first side (2.1) to the treatment zone (3);
- the outlet of the treated liquid from the treatment zone (3) by the action of the untreated liquid pumped from the chamber (2.4) of the first side (2.1) to the treatment zone (3);
- the inlet of the treated liquid to the chamber (2.4) of the second side (2.2);
- the outlet of the treated liquid from the chamber (2.4) of the second side (2.2);

9. The method according to claim 8, **characterized in that** it allows the passage of the liquid through the second large valve (5) and prevents the passage of the liquid through the first large valve (4) during the outlet of the liquid from the chamber (2.4) of the first side (2.1).

10. The method according to any of the claims 8 or 9, **characterized in that** when the fourth large valve (7) is preventing the passage of liquid, the third large valve (6) closes while the main movable element (2.3) is pumping liquid through the first side (2.1).

11. The method according to any of the claims 8 to 10, **characterized in that** with the main movable element (2.3) on the second side (2.2) and the fourth large valve (7) preventing the passage of liquid, the third large valve (6) opens to allow for the inlet of the liquid into the chamber (2.4) of the second side (2.2).

12. The method according to any of claims 8 to 11, **characterized in that** the passage of liquid is regulated such that it alternately enters through the first end (9.1) and the second end (9.2) of each one of the containers (9).

13. The method according to any of the claims 8 to 12, **characterized in that** it comprises an initial pressurization step of the system.

14. The method according to claim 13, **characterized in that** in the initial pressurization step the liquid simultaneously enters through the first end (9.1) and the second end (9.2) of each one of the containers (9).

15. The method according to claim 13 or 14, **characterized in that** the initial pressurization step is carried out with another liquid, different from the alimentary liquid to be treated.
